# EUROPÄISCHE PATENTANMELDUNG

(11) **EP 1 959 212 A2**
(43) Veröffentlichungstag der Anmeldung: **20.08.2008**
(21) Anmeldenummer: 08450013.1
(22) Anmeldetag: 06.02.2008
(51) Int. Cl.: F24J 2/34, F28D 20/02, E04C 1/40

(54) **Einen Latentwärmespeicher bildendes Wandelement**

(30) Priorität: 13.02.2007 AT 2252007
(71) Anmelder: GPP Glass-Project-Partner GmbH, 4320 Perg (AT)
(72) Erfinder: Röthlin, Nikolaus Albert, 4320 Perg (AT)
(74) Vertreter: Hübscher, Helmut

(57) **Zusammenfassung**

Es wird eine einen Latentwärmespeicher bildendes Wandelement mit zwei in einem gegenseitigen Abstand voneinander angeordneten Deckplatten, von denen wenigstens eine aus einem Glaswerkstoff gefertigt ist, und mit einer den Zwischenraum zwischen den beiden Deckplatten ausfüllenden Kernschicht beschrieben, die eine Schüttung von Mikrokapseln eines in einer Kunststoffhülle eingebetteten Phasenwechselmaterials aufweist. Um vorteilhafte Konstruktionsbedingungen zu schaffen, wird vorgeschlagen, dass die Kernschicht eine Mischung aus den Mikrokapseln und aus einem pulverigen Zusatz eines Wärmeleiters mit einer hexagonalen Schichtgitterstruktur umfasst und dass die im Wesentlichen zueinander parallel ausgerichteten Wärmeleiterkristalle und die Mikrokapseln des Phasenwechselmaterials durch eine gegenseitige Verkrallung gegen eine Verlagerung innerhalb der Kernschicht festgehalten sind.

## Beschreibung

Die Erfindung bezieht sich auf ein einen Latentwärmespeicher bildendes Wandelement mit zwei in einem gegenseitigen Abstand voneinander angeordneten Deckplatten, von denen wenigstens eine aus einem Glaswerkstoff gefertigt ist, und mit einer den Zwischenraum zwischen den beiden Deckplatten ausfüllenden Kernschicht, die eine Schüttung von Mikrokapseln eines in einer Kunststoffhülle eingebetteten Phasenwechselmaterials aufweist, sowie auf ein Verfahren zur Herstellung eines solchen Wandelementes.

Um die Wärmespeicherfähigkeit von Wänden aus Bausteinen zu erhöhen, ist es bekannt (DE 10 2004 025 996 A1), hohle Glasbausteine mit einem Phasenwechselmaterial, also einem Material zu füllen, das beim Phasenwechsel von fest zu flüssig Wärme aufnimmt, speichert und bei einer Temperaturerniedrigung und dem damit verbundenen Phasenwechsel von flüssig zu fest wieder abgibt. Nachteilig ist allerdings, dass zum Ausgleich des Dehnungsverhaltens des Phasenwechselmaterials beim Phasenübergang ein elastischer Behälter vorzusehen ist. Außerdem sind Phasenwechselmaterialien schlechte Wärmeleiter, wodurch das Be- und Entladen solcher Latentwärmespeicher erheblich verzögert wird.

Zur Verbesserung des thermischen Ansprechverhaltens von Latentwärmespeichern wurde bereits vorgeschlagen (EP 1 598 406 A1), dem Phasenwechselmaterial Graphit in einer hexagonalen Schichtgitterstruktur als Wärmeleiter zuzumischen. Eine Vorzugsrichtung für die Wärmeleitung kann dabei durch eine Ausrichtung der Graphitkristalle beispielsweise durch ein Rütteln einer entsprechenden Graphitschüttung erreicht werden, die dann mit flüssigem Phasenwechselmaterial infiltriert wird. Mit der Zugabe von Graphit zum Phasenwechselmaterial kann zwar die Wärmeleitfähigkeit innerhalb des Latentwärmespeichers verbessert werden, die Schwierigkeiten bei der Berücksichtung des Dehnungsverhaltens des Phasenwechselmaterials bleiben jedoch bestehen.

Um Phasenwechselmaterial vorteilhaft in Bauplatten oder Baumaterialien einsetzen zu können, ist es bekannt, mikroskopische Tröpfchen eines Phasenwechselmaterials in einer Kunststoffhülle einzukapseln, sodass diese mikroskopischen Kapseln innerhalb von Bauplatten oder Baumaterialen als Latentwärmespeicher genützt werden können, allerdings wegen des beschränkten Anteils am Gesamtvolumen mit einer vergleichsweise geringen Speicherkapazität. Werden solche Mikrokapseln eines Phasenwechselmaterials als Schüttung zwischen zwei Deckplatten eingesetzt, von denen zumindest eine aus einem Glaswerkstoff mit einer guten Durchlässigkeit für Infrarotstrahlung besteht, so können zwar einfach aufgebaute, als Wandelemente einsetzbare Latentwärmespeicher hergestellt werden, doch bleibt das thermische Ansprechverhalten unbefriedigend. Außerdem sind die Deckplatten ausreichend biegesteif auszubilden, um den durch die Schüttung aus Mikrokapseln bedingten Druck nach außen ohne Ausbauchung aufnehmen zu können, was zwangsläufig zu beschränkten Abmessungen dieser Wandelemente führt.

Der Erfindung liegt somit die Aufgabe zugrunde, ein einen Latentwärmespeicher bildendes Wandelement der eingangs geschilderten Art so auszugestalten, dass nicht nur das thermische Ansprechverhalten des Latentwärmespeichers verbessert werden kann, sondern auch die Beschränkungen hinsichtlich der Wandelementgröße weitgehend fallen.

Die Erfindung löst die gestellte Aufgabe dadurch, dass die Kernschicht eine Mischung aus den Mikrokapseln und aus einem pulverigen Zusatz eines Wärmeleiters mit einer hexagonalen Schichtgitterstruktur umfasst und dass die im Wesentlichen zueinander parallel ausgerichteten Wärmeleiterkristalle und die Mikrokapseln des Phasenwechselmaterials durch eine gegenseitige Verkrallung gegen eine Verlagerung innerhalb der Kernschicht festgehalten sind.

Durch das Zumischen eines Wärmeleiters zu den Mikrokapseln des Phasenwechselmaterials wird zunächst in an sich bekannter Weise eine gute Wärmeleitung innerhalb der Kernschicht erreicht und damit das thermische Ansprechverhalten des durch die Kernschicht gebildeten Latentwärmespeichers erheblich verbessert, zumal pulverförmige Wärmeleiter mit einer hexagonalen Schichtgitterstruktur zum Einsatz kommen, die eine mikroskopische Plättchenform der Wärmeleiterteilchen bedingt und damit die Voraussetzung für eine mechanische Ausrichtung der Schichtgitterstruktur mit der Wirkung schafft, dass in Schichtrichtung für eine bevorzugte Wärmeleitung gesorgt werden kann, während sich quer zur Schichtrichtung gute Schalldämmeigenschaften ergeben. Die hexagonale Schichtgitterstruktur der Wärmeleiterkristalle erlaubt darüber hinaus eine gute mechanische Verkrallung der mikroskopischen Wärmeleiterteilchen mit der Kunststoffhülle der Mikrokapseln, sodass einer Verlagerung der Wärmeleiterteilchen und der Mikrokapseln vorteilhaft vorgebeugt werden kann. Das dadurch bedingte Festhalten der einzelnen Teilchen innerhalb der Kernschicht verhindert einerseits eine Entmischung der aus Wärmeleiterteilchen und der Mikrokapseln zusammengesetzten Kernschicht und bringt anderseits für die Kernschicht eine Eigenfestigkeit mit sich, die die Deckplatten weitgehend von einem Innendruck entlastet, sodass die Biegebelastung der Deckplatten durch die Kernschicht kaum eine Einschränkung hinsichtlich der Größe der Wandelemente erfordert und mit Isolierglasscheiben vergleichbare Wandelemente als Latentwärmespeicher eingesetzt werden können. Die Wärmedehnung des Phasenwechselmaterials beim Phasenübergang spielt wegen der Einhüllung des Phasenwechselmaterials in eine stabile Kunststoffhülle und der Ausbildung der Kernschicht in Form einer verdichteten Schüttung nur eine untergeordnete Rolle.

Um einerseits eine gute Wärmeleitung über die gesamte Fläche der Kernschicht und damit eine weitgehende Unabhängigkeit von einer örtlich begrenzten Wärmeeinstrahlung zu erreichen und anderseits ein Wandelement mit guten Wärmedämmeigenschaften zu erhalten, können die plättchenförmigen Wärmeleiterkristalle im Wesentlichen parallel zu den Deckplatten ausgerichtet sein.

Obwohl als Wärmeleiter Graphit in hexagonaler Schichtgitterstruktur eingesetzt werden kann, ergeben sich besondere Vorteile mit hexagonalem Bornitrid als Wärmeleiter. Pulveriges Bornitrid hat nämlich eine Plättchenform mit einem durchschnittlichen Durchmesser bis zu 10 µm, was im Zusammenwirken mit den Mikrokapseln des Phasenwechselmaterials mit beispielsweise einem durchschnittlichen Durchmesser bis zu 30 µm vorteilhafte Schüttdichten der Mischung mit einer guten Wärmeleitung innerhalb der Kernschicht sicherstellt. Außerdem werden gute mechanische Verbindungen zwischen den Bornitridplättchen und den Mikrokapseln erreicht.

Hinsichtlich der Wärmeleitung und der mechanischen Festigkeit der Kernschicht ergeben sich vorteilhafte Bedingungen, wenn der Anteil des Wärmeleiters an der Mischung der Kernschicht 10 bis 30 Gew.% ausmacht, wobei es hinsichtlich des Wärmeleiteranteils keinen wesentlichen Unterschied ausmacht, ob als Wärmeleiter hexagonales Graphit oder hexagonales Bornitrid zum Einsatz kommt. Mit der Zunahme des Wärmeleiteranteils sinkt naturgemäß die Wärmespeicherkapazität des durch die Kernschicht gebildeten Latentwärmespeichers.

Zum Herstellen eines Wandelementes mit zwei Deckplatten und einer zwischen diesen Deckplatten vorgesehenen, einen Latentwärmespeicher bildenden Kernschicht aus Mikrokapseln eines in einer Kunststoffhülle eingebetteten Phasenwechselmaterials kann in den Zwischenraum zwischen den beiden Deckplatten eine Mischung aus den Mikrokapseln und aus einem pulverigen Zusatz eines Wärmeleiters mit einer hexagonalen Schichtgitterstruktur als Kernschicht eingefüllt und durch eine Schwingungsanregung vorverdichtet wird, wobei diese vorverdichtete Kernschicht durch eine Beaufschlagung der Deckplatten über eine Ankopplungsflüssigkeit mit Ultraschall mechanisch verfestigt wird. Zu diesem Zweck werden die Deckplatten randseitig flüssigkeitsdicht miteinander verbunden, sodass das Wandelement nach dem Einfüllen der Kernschicht zur Übertragung der Schallwellen auf die Deckplatten in ein Flüssigkeitsbad eingelegt werden kann. Die Abstützung des Wandelementes im Flüssigkeitsbad erfolgt über gummielastische Auflagen, die über die Fläche des Wandelementes verteilt am Wannenboden des Flüssigkeitsbades vorgesehen sind. Die Vorverdichtung der Kernschicht kann über einer eine mechanische Rütteleinrichtung vorgenommen werden. Es ist aber auch möglich, diese Vorverdichtung mit Hilfe einer Beschallung im Infraschallbereich durchzuführen, und zwar wiederum über eine Ankopplungsflüssigkeit, also in einem Flüssigkeitsbad. Bei der Vorverdichtung wird die Schüttung der Kernschicht mechanisch verdichtet, wobei sich die plättchenförmigen Wärmeleiterteilchen mit einer hexagonalen Schichtgitterstruktur im Wesentlichen parallel zu den Deckplatten ausrichten. Mit der darauf folgenden Beschallung im Ultraschallbereich werden insbesondere die hexagonalen Wärmeleiterteilchen zu Schwingungen angeregt, die eine reibungsbedingte Erwärmung der Kunststoffhüllen der Mikrokapseln des Phasenwechselmaterials im Berührungsbereich und damit ein teilweises Eindringen dieser Teilchen in die Kunststoffhülle bewirken, sodass sich eine mechanische Verkrallung zwischen den Wärmeleiterteilchen und den Mikrokapseln ergibt. Diese mechanische Verkrallung führt zu einer Eigenfestigkeit der Kernschicht, was einerseits eine Entmischung der Mikrokapseln und der Wärmeleiterteilchen verhindert und anderseits eine Formstabilität der Kernschicht mit sich bringt. Damit kann die sonst bei einer Schüttung auftretende Querbelastung der Deckplatten weitgehend unterbunden und ein Wandelement sichergestellt werden, das mit vergleichsweise dünnen Deckplatten den statischen Anforderungen hinsichtlich der Halterung der Kernschicht genügt.

## Patentansprüche

1. Einen Latentwärmespeicher bildendes Wandelement mit zwei in einem gegenseitigen Abstand voneinander angeordneten Deckplatten, von denen wenigstens eine aus einem Glaswerkstoff gefertigt ist, und mit einer den Zwischenraum zwischen den beiden Deckplatten ausfüllenden Kernschicht, die eine Schüttung von Mikrokapseln eines in einer Kunststoffhülle eingebetteten Phasenwechselmaterials aufweist, **dadurch gekennzeichnet, dass** die Kernschicht eine Mischung aus den Mikrokapseln und aus einem pulverigen Zusatz eines Wärmeleiters mit einer hexagonalen Schichtgitterstruktur umfasst und dass die im Wesentlichen zueinander parallel ausgerichteten Wärmeleiterkristalle und die Mikrokapseln des Phasenwechselmaterials durch eine gegenseitige Verkrallung gegen eine Verlagerung innerhalb der Kernschicht festgehalten sind.

2. Wandelement nach Anspruch 1, **dadurch gekennzeichnet, dass** die Wärmeleiterkristalle im Wesentlichen parallel zu den Deckplatten ausgerichtet sind.

3. Wandelement nach Anspruch 1 oder 2, **dadurch gekennzeichnet, dass** der Wärmeleiter aus hexagonalem Bornitrid besteht.

4. Wandelement nach einem der Ansprüche 1 oder 2, **dadurch gekennzeichnet, dass** der Anteil des Wärmeleiters an der Mischung der Kernschicht 10 bis 30 Gew.% ausmacht.

5. Verfahren zum Herstellen eines einen Latentwärmespeicher bildenden Wandelementes mit zwei in einem gegenseitigen Abstand voneinander angeordneten Deckplatten, von denen wenigstens eine aus einem Glaswerkstoff gefertigt ist, wobei in den Zwischenraum zwischen den beiden Deckplatten eine Kernschicht aus Mikrokapseln eines in einer Kunststoffhülle eingebetteten Phasenwechselmaterials eingefüllt und durch eine Schwingungsanregung verdichtet wird, **dadurch gekennzeichnet, dass** in den Zwischenraum zwischen den beiden Deckplatten eine Mischung aus den Mikrokapseln und aus einem pulverigen Zusatz eines Wärmeleiters mit einer hexagonalen Schichtgitterstruktur als Kernschicht eingefüllt und durch eine Schwingungsanregung vorverdichtet wird und dass diese vorverdichtete Kernschicht durch eine Beaufschlagung der Deckplatten über eine Ankopplungsflüssigkeit mit Ultraschall mechanisch verfestigt wird.

6. Verfahren nach Anspruch 5, **dadurch gekennzeichnet, dass** die Kernschicht durch eine Beaufschlagung der Deckplatten über eine Ankopplungsflüssigkeit mit Infraschall vorverdichtet wird.
